(19) Europäisches Patentamt / European Patent Office / Office européen des brevets

(11) **EP 4 475 663 B1**

(12) **EUROPEAN PATENT SPECIFICATION**

(45) Date of publication and mention
of the grant of the patent:
**12.11.2025 Bulletin 2025/46**

(21) Application number: **23710162.1**

(22) Date of filing: **09.02.2023**

(51) International Patent Classification (IPC):
*A01G 25/02* (2006.01)   *C08L 23/08* (2025.01)
*C08F 210/16* (2006.01)   *C08F 4/659* (2006.01)
*C08L 23/0807* (2025.01)

(52) Cooperative Patent Classification (CPC):
(C-Sets available)
**C08L 23/0815; A01G 25/023; C08F 210/16;**
C08F 4/65912; C08F 4/65916; C08L 2205/025
(Cont.)

(86) International application number:
**PCT/US2023/062246**

(87) International publication number:
**WO 2023/154769 (17.08.2023 Gazette 2023/33)**

(54) **BIMODAL MEDIUM DENSITY POLYETHYLENE COMPOSITIONS SUITABLE FOR USE AS MICROIRRIGATION DRIP TAPES**

BIMODALE POLYETHYLENZUSAMMENSETZUNGEN MITTLERER DICHTE ZUR VERWENDUNG ALS TROPFBÄNDER FÜR MIKROBEWÄSSERUNG

COMPOSITIONS DE POLYÉTHYLÈNE À DENSITÉ MOYENNE BIMODALE APPROPRIÉES POUR ÊTRE UTILISÉES EN TANT QUE BANDES DE GOUTTE-À-GOUTTE DE MICRO-IRRIGATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.02.2022   US 202263267844 P**

(43) Date of publication of application:
**18.12.2024   Bulletin 2024/51**

(73) Proprietor: **Dow Global Technologies LLC**
**Midland, MI 48674 (US)**

(72) Inventors:
• **MEHTA, Rujul M.**
**Lake Jackson, Texas 77566 (US)**
• **STOLARZ, Alex**
**8810 Horgen (CH)**
• **ANDERSON, Rachel C.**
**Midland, Michigan 48674 (US)**
• **HE, Chuan C.**
**Lake Jackson, Texas 77566 (US)**
• **KAPUR, Mridula**
**Lake Jackson, Texas 77566 (US)**

(74) Representative: **Boult Wade Tennant LLP**
**Salisbury Square House**
**8 Salisbury Square**
**London EC4Y 8AP (GB)**

(56) References cited:
**WO-A1-2019/118461      US-A1- 2003 187 083**

(52) Cooperative Patent Classification (CPC): (Cont.)

C-Sets
**C08F 210/16, C08F 4/64148, C08F 4/65927;**
**C08F 210/16, C08F 4/65904;**
**C08L 23/0815, C08L 23/0815;**
C08F 210/16, C08F 210/14, C08F 2500/05,
C08F 2500/12, C08F 2500/04, C08F 2500/10,
C08F 2500/39, C08F 2500/30, C08F 2500/31

## Description

### TECHNICAL FIELD

Embodiments of the present disclosure generally relate to bimodal medium density polyethylene compositions, and microirrigation drip tapes including the same.

### INTRODUCTION

A microirrigation drip tape is a tube for transporting and dripping water, fertilizer, and/or nutrition in irrigation systems.

WO2019/118461 A1 relates to a formulation containing a high density polyethylene composition and microirrigation drip tapes containing the same. US 2003/187083 A1 relates to high density polyethylene melt blends for improved stress crack resistance in pipe.

The annual United States microirrigation drip tape market consumes over 120 MM lbs. of polyethylene resins. Currently, microirrigation drip tapes are primarily formed from unimodal polyethylene resins with densities between 0.939 to 0.944 $g/cm^3$, a melt index (I2) of 0.2 to 0.3 g/10 min, and a molecular weight distribution of greater than 15. Existing polyethylene resins, however, have limited processability because the resins lack properties that do not allow processors to produce microirrigation drip tapes with a suitable wall thickness while maintaining tensile strength, strain hardening modulus, and service life. Accordingly, there remains a need for polyethylene compositions suitable for use in microirrigation drip tapes that have desirable processability and have maintained or improved storage hardening modulus, tensile strength, and service life as indicated by notched constant tensile load failure time.

### SUMMARY

Embodiments of the present disclosure meet one or more of the foregoing needs by providing a bimodal medium density polyethylene composition that can be processed at high extrusion speeds and can exhibit improved or maintained tensile strength, storage hardening modulus, and notched constant tensile load failure time. Without being bound by any theory, in some embodiments, the bimodal medium density polyethylene composition has specific properties, including a crossover G'=G" (which is indicative of melt elasticity) and average short chain branching in the low molecular weight polyethylene component, that can allow the composition to be extruded at high speeds and to exhibit maintained or improved storage hardening modulus and notched constant tensile load failure time.

Disclosed herein are bimodal medium density polyethylene compositions. In one or more embodiments, the bimodal medium density polyethylene composition comprises (i) a high molecular weight (HMW) polyethylene component comprising an ethylene/$\alpha$-olefin copolymer and (ii) a low molecular weight (LMW) polyethylene component comprising an ethylene/$\alpha$-olefin copolymer; the bimodal medium density polyethylene composition having the following: (a) a density of from 0.937 to 0.946 $g/cm^3$; (b) a high load melt index (I21) from 7 to 20 g/10 min; (c) a crossover G'=G" of from 30 to 50 kPa; (d) a notched constant tensile load failure time at 30% yield stress, as measured according to ASTM D5397, of greater than 700 hours; (e) a strain hardening modulus of greater than 65 MPa; wherein the LMW polyethylene component has an average short chain branching frequency of greater than 0.9 SCB per 1000 carbons; wherein the HMW polyethylene component has a weight average molecular weight, Mw, of from 300,000 to 600,000 g/mol; and wherein the HMW polyethylene component is present in an amount of from 45 to 60 wt.%, based on total weight of the bimodal medium density polyethylene composition.

Disclosed herein are microirrigation drip tapes. The microirrigation drip tapes comprise the bimodal medium density polyethylene composition disclosed herein.

These and other embodiments are described in more detail in the Detailed Description.

### BRIEF DESCRIPTION OF THE DRAWINGS

FIG. **1** is a perspective view of a microirrigation drip tape with a round cross section.

FIG. **2** is an absolute GPC chromatogram of certain Inventive and Comparative Examples showing local maxima for LMW and HMW polyethylene component peaks and a local minimum between the LMW and HMW polyethylene component peaks.

## DETAILED DESCRIPTION

Aspects of the disclosed bimodal medium density polyethylene compositions are described in more detail below. The bimodal medium density polyethylene compositions are suitable for use as a microirrigation drip tapes and can have a wide variety of applications, including, for example, pipes, tubes, hoses, tapes, or the like. This disclosure, however, should not be construed to limit the embodiments set forth below as this disclosure is an illustrative implementation of the embodiments described herein.

As used herein, the term "polymer" means a polymeric compound prepared by polymerizing monomers, whether of the same or a different type. The generic term polymer thus embraces the term homopolymer (employed to refer to polymers prepared from only one type of monomer), and the term copolymer or interpolymer. Trace amounts of impurities (for example, catalyst residues) may be incorporated into and/or within the polymer. A polymer may be a single polymer, a polymer blend, or a polymer mixture, including mixtures of polymers that are formed *in situ* during polymerization.

As used herein, the term "copolymer" means a polymer formed by the polymerization reaction of at least two structurally different monomers. The term "copolymer" is inclusive of terpolymers.

As used herein, the terms "polyethylene" or "ethylene-based polymer" shall mean polymers comprising a majority amount (>50 mol %) of units which have been derived from ethylene monomer. This includes polyethylene homopolymers and copolymers (meaning units derived from two or more comonomers). The terms "ethylene-based polymer" and "polyethylene" may be used interchangeably. Generally, polyethylene may be produced in gas-phase, fluidized bed reactors, liquid phase slurry process reactors, or liquid phase solution process reactors, using a heterogeneous catalyst system, such as Ziegler-Natta catalyst, a homogeneous catalyst system, comprising Group 4 transition metals and ligand structures such as metallocene, non-metallocene metal-centered, heteroaryl, heterovalent aryloxyether, phosphinimine, and others. Combinations of heterogeneous and/or homogeneous catalysts also may be used in either single reactor or dual reactor configurations.

As used herein, the term "composition" refers to a mixture of materials which comprise the composition, as well as reaction products and decomposition products formed from the materials of the composition.

As used herein, the term "Bimodal Catalyst" refers to a catalyst system that contains two different catalysts for catalyzing polymerization of ethylene copolymers and producing a bimodal copolymer composition. The two catalysts usually differ from each other in at least one of the following characteristics: (a) their catalytic metals are different (such as Ti versus Zr, Zr versus Hf, Ti versus Hf; not activator metals such as Al); (b) one catalyst has a functional ligand bonded to its catalytic metal and the other catalyst is free of functional ligands bonded to its catalytic metal; (c) both catalysts have functional ligands bonded to their catalytic metal and the structure of at least one functional ligand of one catalyst is different than the structure of the functional ligand(s) of the other catalyst; and (d) for catalysts disposed on a support material, the compositions of the support materials are different. Two catalysts of a bimodal catalyst system may be disposed on the same support material, either on the same particles of the same support material or each on different particles of the same support material. When a catalyst system includes the same catalyst in terms of catalytic metal and ligands, wherein a portion thereof is disposed on a support material and a different portion thereof is dissolved in an inert solvent, the different portions do not by themselves constitute a bimodal catalyst system.

As used herein, the term "backbone" refers to the longest continuous polymeric chain of a polymer. All other polymer chains are referred to as side chains, branches, or grafted polymer chains. As used herein, the term "short chains" or "short chain branching" (SCB) refers to branches from the backbone resulting from polymerization of monomers containing three or more carbons.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

Disclosed herein are bimodal medium density polyethylene compositions. As used herein, a medium density polyethylene composition is a polyethylene composition having a density of from 0.937 to 0.946 $g/cm^3$. The bimodal medium density polyethylene composition according to embodiments disclosed herein comprises a high molecular weight (HMW) polyethylene component and a low molecular weight (LMW) polyethylene component. The HMW polyethylene component has a higher molecular weight than the LMW polyethylene component.

The bimodal medium density polyethylene composition according to embodiments disclosed herein is bimodal. A "bimodal" polyethylene composition contains two polyethylene fractions (e.g., a HMW polyethylene component and a LMW polyethylene component) that have been produced under copolymerizing conditions in one polymerization reactor, by contacting ethylene (monomer) and $\alpha$-olefin (comonomer) with a mixture of a Bimodal Catalyst system and a trim solution in the presence of molecular hydrogen gas ($H_2$) and an induced condensing agent (ICA), resulting in different molecular weights and/or different comonomer contents for the fractions as demonstrated by the Bimodality Test Method as described below. For avoidance of any doubt, the bimodal medium density polyethylene composition disclosed here excludes and is not a unimodal polyethylene having a single polyethylene fraction.

HMW Polyethylene Component

The bimodal medium density polyethylene composition comprises a HMW polyethylene component. In some embodiments, the HMW polyethylene component comprises an ethylene/$\alpha$-olefin copolymer.

In some embodiments, the ethylene/$\alpha$-olefin copolymer of the HMW polyethylene component comprises ethylene and an $\alpha$-olefin comonomer. Nonlimiting examples of suitable $\alpha$-olefins include C3-C20 $\alpha$-olefins, or C4-C20 $\alpha$-olefins, or C3-C10 $\alpha$-olefins, or C4-C10 $\alpha$-olefins, or C4-C8 $\alpha$-olefins. Representative $\alpha$-olefins include propylene, 1-butene, 1-pentene, 1-hexene, 1-heptene and 1-octene. In an embodiment, the ethylene/$\alpha$-olefin copolymer does not contain an aromatic comonomer polymerized therein. In a further embodiment, the ethylene/$\alpha$-olefin copolymer is an ethylene/1-hexene copolymer. In an embodiment, the ethylene/$\alpha$-olefin copolymer consists of ethylene, the C4-C8 $\alpha$-olefin comonomer, and optional additive.

In an embodiment, the ethylene/$\alpha$-olefin copolymer contains greater than 50 wt.% units derived from ethylene, or from 51 wt.%, or 55 wt.%, or 60 wt.% to 70 wt.%, or 80 wt.%, or 90 wt.%, or 95 wt.%, or 99 wt.% units derived from ethylene, based on the weight of the ethylene/$\alpha$-olefin copolymer. In an embodiment, the ethylene/$\alpha$-olefin copolymer contains a reciprocal number of units derived from an $\alpha$-olefin comonomer, or from less than 50 wt.%, or 49 wt.%, or 45 wt.%, or 40 wt.% to 30 wt.%, or 20 wt.%, or 10 wt.%, or 5 wt.%, or 1 wt.% units derived from an $\alpha$-olefin comonomer, based on the weight of the ethylene/$\alpha$-olefin copolymer. Comonomer content may be measured using any suitable technique, such as techniques based on nuclear magnetic resonance ("NMR") spectroscopy, and, for example, by 13C NMR analysis as described in U.S. Patent 7,498,282, which is incorporated herein by reference.

In some embodiments, the HMW polyethylene component has an average short chain branching frequency of greater than 1.4 SCB per 1000 carbons. All individual values and subranges of greater than 1.4 SCB per 1000 carbons are included and disclosed herein. For example, the HMW polyethylene component can have an average short chain branching frequency of greater than 1.5 SCB per 1000 carbons, or greater than 1.6 SCB per 1000 carbons, or greater than 1.7 SCB per 1000 carbons, or greater than 1.8 SCB per 1000 carbons; or in the range of from 1.4 to 4.0 SCB per 1000 carbons, or from 1.5 to 3.9 SCB per 1000 carbons, or from 1.6 to 3.8 SCB per 1000 carbons, or from 1.7 to 3.7 SCB per 1000 carbons, or from 1.8 to 3.6 SCB per 1000 carbons. Average short chain branching frequency of the HMW polyethylene component can be measured in accordance with the test method described below.

In some embodiments, the HMW polyethylene component is present in an amount of from 45 to 60 wt.%, based on total weight of the bimodal medium density polyethylene composition. All individual values and subranges of from 45 to 60 wt.% are included and disclosed herein. For example, the HMW polyethylene component can be present in an amount of from 45 to 60 wt.%, from 50 to 60 wt.%, from 53 to 60 wt.%, from 50 to 58 wt.%, from 50 to 56 wt.%, from 52 to 58 wt.%, from 53 to 57 wt.%, or from 52 to 56 wt.%, based on total weight of the bimodal medium density polyethylene composition. The presence of the HMW polyethylene component can also be expressed as a weight fraction as opposed to a weight percent. For example, 50 wt.% can be expressed as 0.50 weight fraction, 60 wt.% can be expressed as 0.60 weight fraction, etc.

In some embodiments, the HMW polyethylene component has a weight average molecular weight, Mw, of from 300,000 to 600,000 g/mol. All individual values and subranges of from 300,000 to 600,000 g/mol are disclosed and included herein. For example, the HMW polyethylene component can have a weight average molecular weight, Mw, of from 325,000 to 575,000 g/mol, from 350,000 to 550,000 g/mol, from 375,000 to 525,000 g/mol, from 375,000 to 500,000 g/mol, from 375,000 to 475,000 g/mol, or from 375,000 to 450,000 g/mol. The weight average molecular weight, Mw, can be measured in accordance with the GPC test method described below.

LMW Polyethylene Component

The bimodal medium density polyethylene composition comprises a LMW polyethylene component. In some embodiments, the LMW polyethylene component comprises an ethylene/$\alpha$-olefin copolymer.

In some embodiments, the ethylene/$\alpha$-olefin copolymer of the LMW polyethylene component comprises ethylene and an $\alpha$-olefin comonomer. Nonlimiting examples of suitable $\alpha$-olefins include C3-C20 $\alpha$-olefins, or C4-C20 $\alpha$-olefins, or C3-C10 $\alpha$-olefins, or C4-C10 $\alpha$-olefins, or C4-C8 $\alpha$-olefins. Representative $\alpha$-olefins include propylene, 1-butene, 1-pentene, 1-hexene, 1-heptene and 1-octene. In an embodiment, the ethylene/$\alpha$-olefin copolymer does not contain an aromatic comonomer polymerized therein. In a further embodiment, the ethylene/$\alpha$-olefin copolymer is an ethylene/1-hexene copolymer. In an embodiment, the ethylene/$\alpha$-olefin copolymer consists of ethylene, the C4-C8 $\alpha$-olefin comonomer, and optional additive.

In an embodiment, the ethylene/$\alpha$-olefin copolymer of the LMW polyethylene component contains greater than 50 wt.% units derived from ethylene, or from 51 wt.%, or 55 wt.%, or 60 wt.% to 70 wt.%, or 80 wt.%, or 90 wt.%, or 95 wt.%, or 99 wt.% units derived from ethylene, based on the weight of the ethylene/α-olefin copolymer. In an embodiment, the ethylene/α-olefin copolymer contains a reciprocal number of units derived from an α-olefin comonomer, or from less than 50 wt.%, or 49 wt.%, or 45 wt.%, or 40 wt.% to 30 wt.%, or 20 wt.%, or 10 wt.%, or 5 wt.%, or 1 wt.% units derived from an α-olefin comonomer, based on the weight of the ethylene/α-olefin copolymer.

In some embodiments, the LMW polyethylene component has an average short chain branching frequency of greater than 0.9 SCB per 1000 carbons. All individual values and subranges of greater than 0.9 SCB per 1000 carbons are included and disclosed herein. For example, the LMW polyethylene component can have an average short chain branching frequency of greater than 0.9 SCB per 1000 carbons, or greater than 1.0 SCB per 1000 carbons, or greater than 1.1 SCB per 1000 carbons or in the range of from 1.0 to 2.5 SCB per 1000 carbons, from 1.0 to 2.2 SCB per 1000 carbons, or from 1.0 to 2.0 SCB per 1000 carbons. The average short chain branching frequency of the LMW polyethylene component can be measured in accordance with the test method described below.

The ethylene/α-olefin copolymer of the LMW polyethylene component and the ethylene/α-olefin copolymer of the HMW polyethylene component differ in at least the molecular weight of the respective component. In an embodiment, the LMW polyethylene component has a weight average molecular weight, Mw, that is less than the weight average molecular weight, Mw, of the HMW polyethylene component, and the LMW polyethylene component has a density that is greater than the density of the HMW polyethylene component. In some embodiments, the ratio of the weight average molecular weight, Mw, of the HMW polyethylene component to the weight average molecular weight, Mw, of the LMW polyethylene component is from 16 to 27. All individual values and subranges of from 16 to 27 are included and disclosed herein. For example, the ratio of the weight average molecular weight, Mw, of the HMW polyethylene component to the weight average molecular weight, Mw, of the LMW polyethylene component can be from 17 to 26, from 18 to 25, or from 20 to 25. The weight average molecular weight, Mw, can be measured in accordance with the GPC test method described below.

Medium Density Polyethylene Composition Characteristics

In some embodiments, the bimodal medium density polyethylene composition has a density of from 0.937 to 0.946 g/cm$^3$, a high load melt index (I21) from 7 to 20 g/10 min, a notched constant tensile load (NCTL) failure time at 30% yield stress, as measured according to ASTM D5397, of greater than 700 hours, and a strain hardening modulus of greater than 65 MPa.

In some embodiments, the bimodal medium density polyethylene composition has a density of from 0.937 to 0.946 g/cm$^3$. All individual values and subranges of from 0.937 to 0.946 g/cm$^3$ are disclosed and included herein. For example, the bimodal medium density polyethylene composition can have a density of from 0.938 to 0.946 g/cm$^3$, from 0.939 to 0.946 g/cm$^3$, from 0.940 to 0.946 g/cm$^3$, from 0.941 to 0.946 g/cm$^3$, from 0.938 to 0.946 g/cm$^3$, from 0.938 to 0.945 g/cm$^3$, from 0.940 to 0.943 g/cm$^3$, or from 0.940 to 0.942 g/cm$^3$, where density is measured in accordance with ASTM D792.

In some embodiments, the bimodal medium density polyethylene composition has a high load melt index (I21) from 7 to 20 g/10 min. All individual values and subranges of from 7 to 20 g/10 min are disclosed and included herein. For example, the bimodal medium density polyethylene composition can have an overall high load melt index (I21) of from 8 to 20 g/10 min, from 9 to 20 g/10 min, from 8 to 19 g/10 min, from 9 to 19 g/10 min, from 10 to 20 g/10 min, from 10 to 19 g/10 min, or from 10 to 18 g/10 min, where high load melt index (I21) of the bimodal medium density polyethylene composition is measured in accordance with ASTM D1238 (190°C/21.6 kg).

In some embodiments, the bimodal medium density polyethylene composition has a crossover G'=G" of 30 to 50 kPa. All individual values and subranges of from 30 to 50 kPa are disclosed and included herein. For example, the bimodal medium density polyethylene composition can have a crossover G'=G" of from 32 to 48 kPa, from 33 to 48 kPa, from 34 to 48 kPa, or from 34 to 47 kPa, where crossover G'=G" is measured in accordance with the test method described below.

In some embodiments, the HMW polyethylene component has an average short chain branching frequency (HMW SCB/1000C), and the following equation is satisfied:

$$3094 \cdot \text{HMW wt.\%} - 30.52 \cdot \text{Crossover G'=G"} - 160.1 \cdot (\text{LMW SCB/1000C/ HMW SCB/1000C}) - 211.7 \geq 0 \quad (\text{Eq. A})$$

wherein "HMW wt.%" is the weight percent of the HWM polyethylene present in the bimodal medium density polyethylene composition, based on total weight of the bimodal medium density polyethylene composition, "Crossover G'=G"" is the crossover G'=G" of the bimodal medium density polyethylene composition, "LMW SCB/1000C" is the average short chain branching frequency of the LMW polyethylene component, and "HMW SCB/1000C" is the average short chain branching frequency of the HMW polyethylene component. In some embodiments, the left side of Equation A above is equal to or greater than 5, equal to or greater than 10, or equal to or greater than 15.

In some embodiments, the bimodal medium density polyethylene composition has a molecular weight distribution, Mw/Mn, of from 12 to 30. All individual values and subranges of from 12 to 30 are included herein. For example, the bimodal medium density polyethylene composition can have a molecular weight distribution, Mw/Mn, of from 12 to 28, from 12 to 26, from 12 to 24, from 12 to 22, from 12 to 20, from 14 to 28, from 14 to 26, from 14 to 24, from 14 to 22, or from 14 to 20, where molecular weight distribution, Mw/Mn, can be measured in accordance with the test method described below.

In some embodiments, the bimodal medium density polyethylene composition has a notched constant tensile load (NCTL) failure time at 30% yield stress of greater than 700 hours. In some embodiments, the bimodal medium density polyethylene composition has a NCTL failure time at 30% yield stress of greater than 750 hours, or 800 hours, or 850 hours, or 900 hours, or 950 hours, where NCTL failure time at 30% yield stress is measured in accordance with the test method described below.

In some embodiments, the bimodal medium density polyethylene composition has a strain hardening modulus of greater than 65 MPa. All individual values and subranges of greater than 65 MPa are disclosed and included herein. For example, the bimodal medium density polyethylene composition can have a strain hardening modulus of greater than 68 MPa, or greater than 70 MPa, or in the range of from 65 to 100 MPa, from 70 to 95 MPa, from 70 to 90 MPa. Strain hardening modulus can be measured in accordance with the test method described below.

In some embodiments, the bimodal medium density polyethylene composition has a tensile stress at yield of from 19 to 30 MPa. All individual values and subranges for from 19 to 30 MPa are disclosed and included herein. For example, the bimodal medium density polyethylene composition can have a tensile stress at yield of from 19 to 27 MPa, from 19 to 26 MPa, from 19 to 25 MPa, from 19 to 24 MPa, from 20 to 27 MPa, from 20 to 26 MPa, from 20 to 25 MPa, or from 20 to 24 MPa, where tensile stress at yield is measured in accordance with the test method described below.

In some embodiments, the bimodal medium density polyethylene composition has a resolved bimodality (resolved molecular weight distribution) showing in a chromatogram of gel permeation chromatography (GPC) of the bimodal medium density polyethylene composition, wherein the chromatogram shows a peak representing the HMW polyethylene component, a peak representing the LMW polyethylene component, and a local minimum in a range of Log(molecular weight) ("Log(MW)") 3.0 to 7.0 between the peak representing the HMW polyethylene component and the peak representing the LMW polyethylene component, measured according to the Bimodality Test Method described below.

In some embodiments, the bimodal medium density polyethylene composition is extrudable at process speeds greater than 300 m/min. In some embodiments, the bimodal medium density polyethylene composition is extrudable at process speeds greater than 325 m/min, or greater than 350 m/min, or greater than 375 m/min. The extrusion line speed can be measured in accordance with the test method described below.

The bimodal medium density polyethylene composition can be made by polymerizing ethylene monomer and the α-olefin comonomer in a reactor with a catalyst, and optionally with other reagents and diluents. The polymerization may take place in a liquid phase, slurry phase or gas phase, but preferably takes place in a gas phase.

To produce the bimodal molecular weight distribution, the copolymers can be produced in a two-stage polymerization or a one-stage polymerization but are preferably made in a one-stage polymerization.

In a two stage polymerization, the higher molecular weight polyethylene component is polymerized by a first catalyst in a first reactor under a first set of process conditions and the lower molecular weight polyethylene component is made by a second catalyst in a second reactor under a second set of process conditions. Examples of such production are described in the following patent publications, which are incorporated herein by reference: US 5,627,242; US 5,665,818; US 5,677,375; US 2007/0043177 A1, EP-A-0 794 200; EP-B1-0 649 992; EP-A-0 802 202; EP-B-634421 and WO 2009/148,487 A1.

In a one-stage polymerization, the higher molecular weight polyethylene component and the lower molecular weight polyethylene component are both polymerized in single reactor using a Bimodal Catalyst. The single stage polymerization preferably takes place in fluidized-bed gas-phase polymerization reactor (FB-GPP reactor), using a Bimodal Catalyst. Such reactors and methods are well-known in the art. For example, FB-GPP reactors and methods are as described in the following patent publications, which are incorporated herein by reference: US 3,709,853; US 4,003,712; US 4,011,382; US 4,302,566; US 4,543,399; US 4,882,400; US 5,352,749; US 5,541,270; US 2020/0024376 A1, US 2020/024376 A1, US 2018/0155473 A1, and WO 2016/172279 A1.

The best operating conditions to produce the polymers of this invention vary depending on the reactor that is used, the catalyst system that is used, and the specific properties desired for the copolymer. The following discussion describes ordinary conditions for common FB-GPP reactors using the Bimodal Catalyst described below:

The molar ratio $(C_x/C_2)$ of comonomer and ethylene being fed into the reactor is preferably at least 0.0001, more preferably at least 0.0002 and most preferably at least 0.0004. The molar ratio $(C_x/C_2)$ of comonomer and ethylene being fed into the reactor is preferably at most 0.1, more preferably at most 0.05 and most preferably at most 0.02.

The ethylene partial pressure in the reactor is preferably at least 690 kPa (100 psia), more preferably at least 830 kPa (120 psia) and most preferably at least 1300 kPa (190 psia). The ethylene partial pressure in the reactor is preferably at most 2070 kPa (300 psia), more preferably at most 1720 kPa (250 psia) and most preferably at most 1590 kPa (230 psia).

The hydrogen to ethylene ($H_2/C_2$) molar ratio in the reactor varies depending on the molecular weights of the polymers being produced. The hydrogen to ethylene ($H_2/C_2$) molar ratio is preferably at least 0.0003 and more preferably at least 0.001. The hydrogen to ethylene ($H_2/C_2$) molar ratio is preferably at most 0.01 and more preferably at most about 0.006.

The catalyst system (described below) may be fed into the polymerization reactor in "dry mode" or "wet mode. The dry mode is a dry powder or granules. The wet mode is a suspension in an inert liquid such as mineral oil. Preferably, the catalyst system is fed in wet mode.

Optionally, the catalyst system may comprise the main catalyst plus a "trim catalyst" that provides additional control over the ratio of the higher molecular weight polyethylene component to the lower molecular weight polyethylene component in the final copolymer. For example, the trim catalyst may contain catalytic material that supplements the formation of either the higher molecular weight polyethylene component or the lower molecular weight polyethylene component of the composition. Use of trim catalysts is described in greater detail in the PCT patent publications WO 2015/123172A1 and WO 2015/123179A1, which are incorporated herein by reference.

The bed temperature in the reactor is preferably at least 70°C, more preferably at least 80°C and most preferably at least 85°C. The bed temperature in the reactor is preferably at most 110°C, more preferably at most 100°C and most preferably at most 95°C.

The flow of reactants through the reactor is preferably at a rate sufficient to maintain the bed of the reactor in a fluidized state.

Optionally, an inert liquid (called an induced condensing agent (ICA)) may be added to the reactor to assist in cooling the reactor. The ICA is preferably a ($C_5$ to $C_{20}$) alkane, more preferably a ($C_5$ to $C_{10}$)alkane, and most preferably pentane or 2-methylbutane (i.e., isopentane). Use of ICA is described in the following patent publications, which are incorporated herein by reference: US 4,453,399; US 4,588,790; US 4,994,534; US 5,352,749; US 5,462,999; and US 6,489,408. The concentration of ICA is preferably at least 1 mole percent and more preferably at least 3 mole percent. The concentration of ICA is preferably at most 20 mole percent and more preferably at most 8 mole percent.

Optionally, a continuity additive may be added to the reactor to control sheeting in the reactor. Suitable continuity additives are commercially available from Univation Technologies LLC as CA-200 and CA-300. The concentration of continuity additive is preferably at least 0.5 ppmw and more preferably at least 30 ppmw. The concentration of continuity additive is preferably at most 200 ppmw and more preferably at most 80 ppmw.

The polymerization conditions may further include one or more additives such as a chain transfer agent or a promoter. The chain transfer agents are well known and may be alkyl metal such as diethyl zinc. Promoters are known such as in US 4,988,783 and may include chloroform, $CFCl_3$, trichloroethane, and difluorotetrachloroethane. Prior to reactor start up, a scavenging agent may be used to react with moisture and during reactor transitions a scavenging agent may be used to react with excess activator. Scavenging agents may be a trialkylaluminum. Gas phase polymerizations may be operated free of (not deliberately added) scavenging agents. The polymerization conditions for gas phase polymerization reactor/method may further include an amount (such as 0.5 to 200 ppm based on all feeds into reactor) of a static control agent and/or a continuity additive such as aluminum stearate or polyethyleneimine. The static control agent may be added to the FB-GPP reactor to inhibit formation or buildup of static charge therein.

The start-up of a recommissioned FB-GPP reactor (cold start) or restart of a transitioning FB-GPP reactor (warm start) includes a time period that is prior to reaching steady-state polymerization conditions. Start-up or restart may include the use of a polymer seedbed preloaded into the fluidized bed reactor. The polymer seedbed may be composed of powder of a polyethylene; it is preferably a bimodal copolymer similar to the bimodal medium density polyethylene composition that is intended to be made.

Start-up or restart of the FB-GPP reactor may also include gas atmosphere transitions comprising purging air or other unwanted gas(es) from the reactor with a dry (anhydrous) inert purge gas, followed by purging the dry inert purge gas from the FB-GPP reactor with dry ethylene gas. The dry inert purge gas may consist essentially of molecular nitrogen ($N_2$), argon, helium, or a mixture of any two or more thereof. When not in operation, prior to start-up (cold start), the FB-GPP reactor contains an atmosphere of air. The dry inert purge gas may be used to sweep the air from a recommissioned FB-GPP reactor during early stages of start-up to give a FB-GPP reactor having an atmosphere consisting of the dry inert purge gas. Prior to restart (e.g., after a change in seedbeds), a transitioning FB-GPP reactor may contain an atmosphere of unwanted ICA or other unwanted gas or vapor. The dry inert purge gas may be used to sweep the unwanted vapor or gas from the transitioning FB-GPP reactor during early stages of restart to give the FB-GPP reactor an atmosphere consisting of the dry inert purge gas. Any dry inert purge gas may itself be swept from the FB-GPP reactor with the dry ethylene gas. The dry ethylene gas may further contain molecular hydrogen gas such that the dry ethylene gas is fed into the fluidized bed reactor as a mixture thereof. Alternatively, the dry molecular hydrogen gas may be introduced separately and after the atmosphere of the fluidized bed reactor has been transitioned to ethylene. The gas atmosphere transitions may be done prior to, during, or after heating the FB-GPP reactor to the reaction temperature of the polymerization conditions.

Start-up or restart of the FB-GPP reactor also includes introducing feeds of reactants and reagents thereinto. The reactants include the ethylene and the alpha-olefin (e.g., 1-hexene). The reagents fed into the fluidized bed reactor include the molecular hydrogen gas and the induced condensing agent (ICA) and the Bimodal Catalyst System and the trim catalyst.

Two-reactor polymerizations of bimodal copolymers can be carried out using conventional catalyst systems. One-reactor polymerizations of bimodal copolymers are typically carried out using a Bimodal Catalyst that has one catalyst component which is especially suited to make the higher molecular weight (HMW) polyethylene fraction of the composition and another which is especially suited to make the lower molecular weight (LMW) polyethylene fraction of the composition. Preferred Bimodal Catalyst systems preferentially direct a greater portion of the $\alpha$-olefin comonomer into the higher molecular weight fraction; such Bimodal Catalysts (and processes to make them) are described in the following patent publications, which are incorporated herein by reference: US 2020/048379 A1, US 2020/024376 A1, US 2018/0155473 A1, WO 2016/172279 A1.

Bimodal Catalyst systems that are especially useful to produce the copolymers are described in US Patent Application 62/880,826, titled "Bimodal Poly(Ethylene-Co-1-Alkene) Copolymer Bimodal Poly(Ethylene-Co-1-Alkene) Copolymer" and filed on July 31, 2019; US Patent Application 62/990,549, titled "Metal-Ligand Complexes" and filed on March 17, 2020; and PCT Application PCT/US20/30033, titled "Metal-Ligand Complexes" and filed on April 27, 2020, which are incorporated herein by reference.

The preferred catalyst systems comprise a bis(2-(pentamethylphenylamido)ethyl)-amine zirconium dibenzyl component and a (cyclopentadienyl)(1,5-dimethylindenyl)zirconium $(X)_2$ component, wherein X is a moiety that completes the valence of the zirconium. X is preferably a halide or an alkyl group containing 1-4 carbon atoms and is more preferably a methyl group. Without being bound by theory, it is believed that the bis(2-(pentamethylphenylamido) ethyl)-amine zirconium dibenzyl is effective for making the HMW polyethylene component of the bimodal copolymer and the (cyclopentadienyl)(1,5-dimethylindenyl)zirconium dimethyl is effective for making the LMW polyethylene component of the bimodal copolymer.

The HMW catalyst and the LMW catalyst in the Bimodal Catalyst system may be kept separate until they are added to the reactor, in which case each catalyst may be unsupported or deposited on its own support. Preferably, the HMW catalyst and the LMW catalyst in the Bimodal Catalyst system are deposited together on a single support.

Preferably, the catalysts of the Bimodal Catalyst system are applied on a solid support material, such as by spray-drying. The support material preferably comprises a porous inorganic substance or organic substance. It more preferably comprises a Group 2, 3, 4, 5, 13 or 14 metal oxide, and more highly preferably comprises a Group 13 or 14 metal oxide. Examples of inorganic oxide-type support materials are silica, alumina, titania, zirconia, thoria, and mixtures of any two or more of such inorganic oxides. The solid support material is most preferably a hydrophobic fumed silica (such as a fumed silica treated with dimethyldichlorosilane).

The inorganic oxide support material is porous and has variable surface area, pore volume, and average particle size. In some embodiments, the surface area is from 50 to 1000 square meter per gram ($m^2$/g) and the average particle size is from 20 to 300 micrometers ($\mu$m). Alternatively, the pore volume is from 0.5 to 6.0 cubic centimeters per gram ($cm^3$/g) and the surface area is from 200 to 600 $m^2$/g. Alternatively, the pore volume is from 1.1 to 1.8 $cm^3$/g and the surface area is from 245 to 375 $m^2$/g. Alternatively, the pore volume is from 2.4 to 3.7 $cm^3$/g and the surface area is from 410 to 620 $m^2$/g. Alternatively, the pore volume is from 0.9 to 1.4 $cm^3$/g and the surface area is from 390 to 590 $m^2$/g. Each of the above properties are measured using conventional techniques known in the art.

Prior to being contacted with a catalyst, the support material may be pre-treated by heating the support material in air to give a calcined support material. The pre-treating comprises heating the support material at a peak temperature from 350° to 850°C., alternatively from 400° to 800°C., alternatively from 400° to 700°C., alternatively from 500° to 650°C. and for a time period from 2 to 24 hours, alternatively from 4 to 16 hours, alternatively from 8 to 12 hours, alternatively from 1 to 4 hours, thereby making a calcined support material. In some aspects, the support material is a calcined support material.

Most preferably, the Bimodal Catalyst system comprises from 1.0 to 5.0 weight percent bis(2-(pentamethylphenylamido)ethyl)amine zirconium dibenzyl and from 0.1 to 2.0 weight percent (cyclopentadienyl)(1,5-dimethylindenyl) zirconium dimethyl or (1,3-dimethyl-4,5,6,7-tetrahydroindene)(methyl cyclopentadienyl)zirconium dimethyl, applied to a fumed silica support.

The trim catalyst may be any HMW catalyst or LMW catalyst. The trim catalyst is preferably the same as either the HMW catalyst or the LMW catalyst in the bimodal catalyst system. For the most preferred catalyst system, the trim catalyst is preferably (cyclopentadienyl)(1,5-dimethylindenyl)zirconium dimethyl or (1,3-dimethyl- 4,5,6,7-tetrahydroindene) (methyl cyclopentadienyl)zirconium dimethyl bis(n-butylcyclopentadienyl)zirconium dimethyl.

For convenience, the trim catalyst is preferably fed into the reactor in solution in a hydrocarbon solvent. The hydrocarbon solvent may be an alkane, or a mixture of alkanes, wherein each alkane independently has from 5 to 20 carbon atoms, alternatively from 5 to 12 carbon atoms, alternatively from 5 to 10 carbon atoms. Each alkane independently may be acyclic or cyclic. Each acyclic alkane independently may be straight chain or branched chain. Examples of acyclic alkane include pentane, 1-methylbutane (isopentane), hexane, 1-methylpentane (isohexane), heptane, 1-methylhexane (isoheptane), octane, nonane, decane, or a mixture of any two or more thereof. Examples of cyclic alkane include cyclopentane, cyclohexane, cycloheptane, cyclooctane, cyclononane, cyclodecane, methycyclopentane, methylcyclohexane, dimethylcyclopentane, or a mixture of any two or more thereof.

Each catalyst of the Bimodal Catalyst system and the trim catalyst is preferably activated by contacting it with at least one activator. Activators are preferably a Lewis acid, a non-coordinating ionic activator, or an ionizing activator, or a Lewis base, an alkylaluminum, or an alkylaluminoxane (alkylalumoxane). The alkylaluminum may be a trialkylaluminum, alkylaluminum halide, or alkylaluminum alkoxide (diethylaluminum ethoxide). The trialkylaluminum may be trimethylaluminum, triethylaluminum ("TEAL"), tripropylaluminum, or tris(2-methylpropyl)aluminum. The alkylaluminum halide may be diethylaluminum chloride. The alkylaluminum alkoxide may be diethylaluminum ethoxide. The alkylaluminoxane may be a methylaluminoxane (MAO), ethylaluminoxane, 2-methylpropyl-aluminoxane, or a modified methylaluminoxane (MMAO). Each alkyl of the alkylaluminum or alkylaluminoxane independently may be a $(C_1$ to $C_7)$alkyl, alternatively a $(C_1$ to $C_6)$alkyl, alternatively a $(C_1$ to $C_4)$alkyl. The molar ratio of activator's metal (Al) to a particular catalyst compound's metal (catalytic metal, e.g., Zr) may be 1000:1 to 0.5:1, alternatively 300:1 to 1:1, alternatively 150:1 to 1:1. Suitable activators are commercially available.

Each contacting step between activator and catalyst independently may be done either (a) in a separate vessel outside the GPP reactor (e.g., outside the FB-GPP reactor), (b) in a feed line to the GPP reactor, and/or (c) inside the GPP reactor (in situ). In option (a) the Bimodal Catalyst system, once its catalysts are activated, may be fed into the GPP reactor as a dry powder, alternatively as a slurry in a non-polar, aprotic (hydrocarbon) solvent. In option (c) the Bimodal Catalyst system may be fed into the reactor prior to activation via a first feed line, the first activator may be fed into the reactor via a second feed line, the trim catalyst may be fed into the reactor via a third feed line, and the second activator may be fed into the reactor via a fourth feed line. Any two of the first to fourth feed lines may be the same or different. The activator(s) may be fed into the reactor in "wet mode" in the form of a solution thereof in an inert liquid such as mineral oil or toluene, in slurry mode as a suspension, or in dry mode as a powder. Each contacting step may be done in separate vessels, feed lines, or reactors at the same or different times, or in the same vessel, feed line, or reactor at different times, to separately give the Bimodal Catalyst system and trim catalyst. Alternatively, the contacting steps may be done in the same vessel, feed line, or reactor at the same time to give a mixture of the Bimodal Catalyst system and trim catalyst in situ.

The bimodal medium density polyethylene composition may comprise two or more embodiments discussed herein.

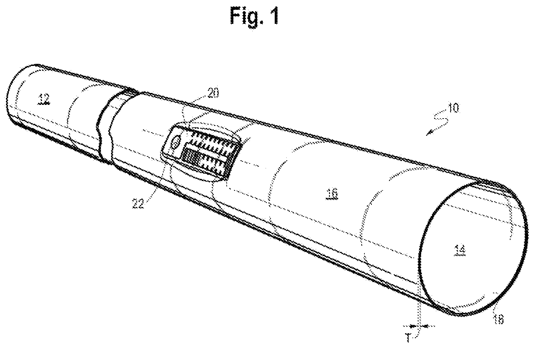

Also disclosed herein is a microirrigation drip tape. The microirrigation drip tape comprises the bimodal medium density polyethylene composition described herein. A "microirrigation drip tape" is an extruded structure having an annular wall composed of the bimodal medium density polyethylene composition, the annular wall defining an annular passageway. In other words, the microirrigation drip tape is a tube through which water, or another liquid, may pass. Figure 1 depicts a microirrigation drip tape 10 having an annular wall 12 that defines an annular passageway 14. The annular wall 12 has an exterior surface 16 and an interior surface 18. In an embodiment, the annular wall 12 of the microirrigation drip tape 10 is composed solely of the bimodal medium density polyethylene composition.

Emitters 20 are arranged at intervals along the interior surface 18 of the annular wall 12. An "emitter" is an insert that controls the rate at which water or another liquid passes through an opening 22 (e.g., a hole, a slit, or a perforation) made in the annular wall by mechanical drilling, cutting or laser cutting. The emitter 20 is placed on the interior surface 18 of the annular wall 12 after the microirrigation drip tape 10 exits the extruder while the formulation is in transition from the molten state to the rigid state, which enables the emitter 20 to adhere to the microirrigation drip tape 10 via welding. The adherence of the emitter 20 to the annular wall 12 is sufficient to keep the emitter 20 in a fixed position, and to maintain a leak-proof seal between the annular wall 12 and the emitter 20.

The microirrigation drip tape has a cross-sectional shape. Nonlimiting examples of suitable cross-sectional shapes for the microirrigation drip tape include ellipse, polygon, and combinations thereof. A "polygon" is a closed-plane figure bounded by at least three sides. The polygon can be a regular polygon, or an irregular polygon having three, four, five, six, seven, eight, nine, ten or more sides. Nonlimiting examples of suitable polygonal shapes include triangle, square, rectangle, diamond, trapezoid, parallelogram, hexagon and octagon. An "ellipse" is a plane curve such that the sum of the distances of each point in its periphery from two fixed points, the foci, are equal. The ellipse has a center which is the midpoint of the line segment linking the two foci. The ellipse has a major axis (the longest diameter through the center). The minor axis is the shortest line through the center. The ellipse center is the intersection of the major axis and the minor axis. A "circle" is a specific form of ellipse, where the two focal points are in the same place (at the circle's center). Nonlimiting examples of ellipse shapes include circle, oval, and ovoid. Figure 1 depicts a microirrigation drip tape 10 having a circle cross-sectional shape.

**TEST METHODS**

Density

Density is measured in accordance with ASTM D792, and expressed in grams/cm$^3$ (g/cm$^3$ or g/cc).

Melt Flow Rate (I2, I5 and I21)

The procedure described in ASTM D1238 is followed to determine the melt flow rate. This test method covers the determination of the rate of extrusion of molten thermoplastic resins using an extrusion plastometer. After a specified preheating time of 7 (+/- 0.5) min, resin is extruded through a die with a specified length and orifice diameter under prescribed conditions of temperature, load, and piston position in the barrel. Method B of ASTM D1238 is used. Method B is an automatically timed method. Here, the sample is extruded from the melt index machine and the piston travel is timed over a pre-determined distance, the timing is performed automatically by a moveable arm position below the load frame. The pre-determined distance is 6.35 mm for a I2 of up to 10 g/10 min and 25.4 mm for a I2 of > 10 g/10 min. The weight of the extrudate is determined from the volume (distance x bore area) and the melt density. The melt density is taken to be 0.7636 g/cm$^3$ for polyethylene. The data are reported as MFR in g/10 min or dg/min. Samples can be run with loads of 21.6 kg, 5.0 kg or 2.16 kg (i.e., I21, I5 or I2, respectively).

Notched Constant Tensile Load (NCTL)

Notched constant tensile load (NCTL) failure time in hours is measured at 30% yield stress in accordance with ASTM D5397. This test is tested at 50°C with an aqueous solution of 10% Igepal. The sample thickness is 0.075" thick and are notched to a depth of 20% of the thickness. The stress applied is equal to 30% of yield stress of the resin measured at room temperature.

Tensile Yield Strength

Tensile yield strength of the bimodal medium density polyethylene composition in MPa is measured using samples prepared by compression molding pellets according to ASTM D638 (2 inch/min crosshead speed, 5.08 cm/min crosshead speed).

Strain Hardening Modulus

Strain hardening modulus of the bimodal medium density polyethylene composition in MPa is measured using samples prepared by compression molding pellets according to ISO 18488:2015 (sample thickness 0.3 mm, 20 mm/min crosshead speed, test temperature 80 °C).

Dynamic Mechanical Spectroscopy (Crossover G'=G")

Each sample was compression molded into a disk for rheology measurement. The disks were prepared by pressing the samples into 3.0 mm thick plaques, and were subsequently cut into 25 mm diameter disks. The resin rheology was measured on the ARES-G2 model Rheometer from TA Instruments. The ARES is a strain-controlled rheometer. A rotary actuator (servomotor) applies shear deformation in the form of strain to a sample. In response, the sample generates torque, which is measured by the transducer. Strain and torque are used to calculate dynamic mechanical properties, such as modulus and viscosity. The Viscoelastic properties of the sample were measured, in the melt, using a 25 mm diameter parallel plate set up, at 190° C., and as a function of varying frequency (range 0.01 s-1 to 100s-1). A small constant strain (5%) was applied to ensure the measurement was in the linear Viscoelastic region. The storage modulus (G'), loss modulus (G"), tan delta (G"/G'), and complex viscosity (eta) of the resin were determined. Crossover G'=G" is recorded in kPa as a measure of melt elasticity, with lower the value, the higher melt elasticity.

Absolute GPC (Molecular weight distribution)

The chromatographic system consisted of a PolymerChar GPC-IR (Valencia, Spain) high temperature GPC chromatograph equipped with an internal IR5 infra-red detector (IR5) coupled to a Precision Detectors (Now Agilent Technologies) 2-angle laser light scattering (LS) detector Model 2040. For all Light scattering measurements, the 15 degree angle is used for measurement purposes. The autosampler oven compartment was set at 160° Celsius and the column compartment and detectors were set at 150° Celsius. The columns used were 4 Agilent "Mixed A" 30cm 20-micron linear mixed-bed columns. The chromatographic solvent used was 1,2,4 trichlorobenzene and contained 200 ppm of butylated hydroxytoluene (BHT). The solvent source was nitrogen sparged. The injection volume used was 200 microliters and the flow rate was 1.0 milliliters/minute. e.

Calibration of the GPC column set was performed with 21 narrow molecular weight distribution polystyrene standards with molecular weights ranging from 580 to 8,400,000 g/mol and were arranged in 6 "cocktail" mixtures with at least a decade of separation between individual molecular weights. The standards were purchased from Agilent Technologies. The polystyrene standards were prepared at 0.025 grams in 50 milliliters of solvent for molecular weights equal to or greater than 1,000,000 g/mol, and 0.05 grams in 50 milliliters of solvent for molecular weights less than 1,000,000 g/mol. The polystyrene standards were dissolved at 80°C with gentle agitation for 30 minutes. The polystyrene standard peak molecular weights were converted to ethylene-based polymer molecular weights using Eq. 2 (as described in Williams and Ward, J. Polym. Sci., Polym. Let., 6, 621 (1968)).:

$$M_{polyethylene} = A \times (M_{polystyrene})^B \qquad Eq.2$$

where M is the molecular weight, A has a value of 0.4315 and B is equal to 1.0.

A fifth order polynomial was used to fit the respective ethylene-based polymer -equivalent calibration points.

The total plate count of the GPC column set was performed with decane without further dilution. The plate count (Eq. 3) and symmetry (Eq. 4) were measured on a 200 microliter injection according to the following equations:

$$Plate\ Count = 5.54 \times (\frac{RV_{Peak\ Max}}{Peak\ Width\ at\ half\ height})^2 \qquad Eq.3$$

where RV is the retention volume in milliliters, the peak width is in milliliters, the peak max is the maximum height of the peak, and half height is one half of the height of the peak maximum.

$$Symmetry = \frac{\left(Rear\ Peak\ RV_{one\ tenth\ height} - RV_{Peak\ max}\right)}{\left(RV_{Peak\ max} - Front\ Peak\ RV_{one\ tenth\ height}\right)} \qquad Eq.4$$

where RV is the retention volume in milliliters and the peak width is in milliliters, Peak max is the maximum position of the peak, one tenth height is one tenth of the height of the peak maximum, and where rear peak refers to the peak tail at later retention volumes than the peak max and where front peak refers to the peak front at earlier retention volumes than the peak max. The plate count for the chromatographic system should be greater than 18,000 and symmetry should be between 0.98 and 1.22.

Samples were prepared in a semi-automatic manner with the PolymerChar "Instrument Control" Software, wherein the samples were weight-targeted at 2 mg/ml, and the solvent (contained 200ppm BHT) was added to a pre nitrogen-sparged septa-capped vial, via the PolymerChar high temperature autosampler. The samples were dissolved for 3 hours at 160 °C under "low speed" shaking.

In order to monitor the deviations over time, a flowrate marker (decane) was introduced into each sample via a micropump controlled with the PolymerChar GPC-IR system. This flowrate marker (FM) was used to linearly correct the pump flowrate (Flowrate(nominal)) for each sample by RV alignment of the respective decane peak within the sample (RV(FM Sample)) to that of the decane peak within the narrow standards calibration (RV(FM Calibrated)). Any changes in the time of the decane marker peak are then assumed to be related to a linear-shift in flowrate (Flowrate(effective)) for the entire run. To facilitate the highest accuracy of a RV measurement of the flow marker peak, a least-squares fitting routine is used to fit the peak of the flow marker concentration chromatogram to a quadratic equation. The first derivative of the quadratic equation is then used to solve for the true peak position. After calibrating the system based on a flow marker peak, the effective flowrate (with respect to the narrow standards calibration) is calculated as Eq. 5. Processing of the flow marker peak was done via the PolymerChar GPCOne™ Software. Acceptable flowrate correction is such that the effective flowrate should be within 0.5% of the nominal flowrate.

$$Flow\ rate_{effective} = Flow\ rate_{nominal} \times \left(RV(FM_{calibrated})/RV(FM_{Sample})\right) \qquad Eq.5$$

The Systematic Approach for the determination of multi-detector offsets is done in a manner consistent with that published by Balke, Mourey, et. al. (Mourey and Balke, Chromatography Polym. Chpt 12, (1992)) (Balke, Thitiratsakul, Lew, Cheung, Mourey, Chromatography Polym. Chpt 13, (1992)), optimizing triple detector log (MW and IV) results from a broad homopolymer polyethylene standard (Mw/Mn > 3) to the narrow standard column calibration results from the narrow standards calibration curve using PolymerChar GPCOne™ Software.

The absolute molecular weight data was obtained in a manner consistent with that published by Zimm (Zimm, B.H., J. Chem. Phys., 16, 1099 (1948)) and Kratochvil (Kratochvil, P., Classical Light Scattering from Polymer Solutions, Elsevier, Oxford, NY (1987)) using PolymerChar GPCOne™ software. The overall injected concentration, used in the determination of the molecular weight, was obtained from the mass detector area and the mass detector constant, derived from a suitable linear polyethylene homopolymer, or one of the polyethylene standards of known weight-average molecular weight. The calculated molecular weights (using GPCOne™) were obtained using a light scattering constant, derived from one or more of the polyethylene standards mentioned below, and a refractive index concentration coefficient, dn/dc, of 0.104. Generally, the mass detector response (IR5) and the light scattering constant (determined using GPCOne™) should be determined from a linear standard with a molecular weight in excess of about 50,000 g/mole. The viscometer calibration (determined using GPCOne™) can be accomplished using the methods described by the manufacturer, or, alternatively, by using the published values of suitable linear standards, such as Standard Reference Materials (SRM) 1475a (available from National Institute of Standards and Technology (NIST)). A viscometer constant (obtained using GPCOne™) is calculated which relates specific viscosity area (DV) and injected mass for the calibration standard to its intrinsic viscosity. The chromatographic concentrations are assumed low enough to eliminate addressing 2nd viral coefficient effects (concentration effects on molecular weight)..

Absolute weight-average molecular weight (MW$_{(Abs)}$) is obtained (using GPCOne™) from the Area of the Light Scattering (LS) integrated chromatogram (factored by the light scattering constant) divided by the mass recovered from the mass constant and the mass detector (IR5) area. The molecular weight and intrinsic viscosity responses are linearly extrapolated at chromatographic ends where signal to noise becomes low (using GPCOne™),

Absolute number-average molecular weight (Mn$_{(Abs)}$), weight-average (Mw$_{(Abs)}$) and absolute z-average molecular weight (Mz$_{(Abs)}$) are calculated according to Eqs 6-8 as follows :

$$Mn(Abs) = \frac{\sum^i IR_i}{\sum^i \left( IR_i \big/ M_{Absolute_i} \right)} \qquad Eq.\,6$$

$$Mw(Abs) = \frac{\sum^i \left( IR_i * M_{Absolute_i} \right)}{\sum^i (IR_i)} \qquad Eq.\,7$$

$$Mz(Abs) = \frac{\sum^i \left( IR_i * M_{Absolute_i}^{\,2} \right)}{\sum^i \left( IR_i * M_{Absolute_i} \right)} \qquad Eq.\,8$$

Average Short Chain Branching Frequency

A calibration for the IRS detector ratioing was performed using at least ten ethylene-based polymer standards (ethylene-based polymer homopolymer and ethylene/octene copolymers) of known short chain branching (SCB) frequency (The comonomer content of the reference materials is determined using 13C NMR analysis in accordance with techniques described, for example, in U.S. Patent No. 5,292,845 (Kawasaki, et al.) and by J. C. Randall in Rev. Macromol. Chem. Phys., C29, 201-317), ranging from homopolymer (0 SCB/1000 total C) to approximately 50 SCB/1000 total C, where total C is equal to the carbons in backbone plus the carbons in branches. Each standard had a weight-average molecular weight from 36,000 g/mole to 126,000 g/mole and had a molecular weight distribution from 2.0 to 2.5, as determined by GPC.

The "IR5 Height Ratio (or "IR5 $_{Methyl\ Channel\ Height}$ / IR5 $_{Measurement\ Channel\ Height}$")" of "the baseline-subtracted height response of the IRS methyl channel sensor" to "the baseline-subtracted area response of IRS measurement channel sensor" (standard filters and filter wheel as supplied by PolymerChar: Part Number IR5_FWM01 included as part of the GPC-IR instrument) was calculated for each of the "Copolymer" standards. A linear fit of the Wt% Comonomer frequency versus the "IR5 Height Ratio" was constructed in the form of the following Eq. 9:

$$\text{wt\% Comonomer} \;=\; A_0 + \left[ A_1 \left( IR5_{Methyl\ Channel\ Area} \big/ IR5_{Measurement\ Channel\ Area} \right) \right] \qquad Eq.\,9$$

with coefficients $A_0$ = -47.94 and $A_1$ = 239.0.

Therefore, a GPC-CC (GPC-Comonomer Content) plot (comonomer wt% vs. 1gMW) can be obtained. End-Group Correction of the wt% Comonomer data can be made via knowledge of the termination mechanism if there is significant spectral overlap with the comonomer termination (methyls) via the molecular weight determined at each chromatographic slice. SCB frequency for each slice, SCB$_i$ of lgMw$_i$ can be calculated by the relationship

$$SCB_i = \sum^i (0.8 * \text{comonomer wt\%}_i) \qquad Eq.\,10$$

for ethylene-octene copolymers
and

$$SCB_i = \sum^{i} (0.6 * \text{comonomer wt\%}_i) \qquad Eq. 11$$

for ethylene-hexene copolymers.

Average SCB frequency over the entire distribution can then be calculated

$$Average\ SCB = \sum^{i}(\text{wtGPC}_i * SCB_i). \qquad Eq. 12$$

Deconvolution of GPC Chromatogram

The fitting of the chromatogram into a high molecular weight (HMW) and low molecular weight (LMW) component fraction was accomplished using a Flory distribution which was broadened with a normal distribution function as follows: For the log M axis, 501 equally-spaced Log(M) points, spaced by 0.01, were established between 2 and 7 representing the molecular weight range between 100 and 10,000,000 where Log is the logarithm function to the base 10.
At any given Log (M), the population of the Flory distribution was in the form of Eq. 13:

$$dW_f = \left(\frac{2}{M_w}\right)^3 \left(\frac{M_w}{0.868588961964}\right)\ M^2\ e^{\left(-2M/M_w\right)} \qquad Eq. 13$$

where Mw is the weight-average molecular weight of the Flory distribution and M is the specific x-axis molecular weight point, (10^[Log(M)]).
The Flory distribution weight fraction was broadened at each 0.01 equally-spaced log(M) index according to a normal distribution function, of width expressed in Log(M), $\sigma$; and current M index expressed as Log(M), $\mu$.

$$f_{(LogM,\mu,\sigma)} = \frac{e^{-\frac{(LogM-\mu)^2}{2\sigma^2}}}{\sigma\sqrt{2\pi}} \qquad Eq. 14$$

It should be noted that before and after the spreading function has been applied that the area of the distribution $(dW_f /dLogM)$ as a function of Log(M) is normalized to unity.
Two weight-fraction distributions, $dW_{f1}$ and $dW_{f2}$, for LMW and HMW components or components 1 and 2 were expressed with two unique Mw target values, $Mw_1$ and $Mw_2$ and with overall component compositions $A_1$ and $A_2$. Both distributions were broadened with the same width, $\sigma$. The two distributions were summed as follows:

$$dW_f = A_1\ dW_{f1} +\ A_2\ dW_{f2} \qquad Eq. 15$$

where: $A_1 + A_2 = 1$
The weight fraction result of the measured (from Conventional GPC) GPC molecular weight distribution was interpolated along 501 log M points using a 2nd-order polynomial. Microsoft Excel™ 2010 Solver was used to minimize the sum of squares of residuals for the equally-spaces range of 501 LogM points between the interpolated chromatographically determined molecular weight distribution and the two broadened Flory distribution components ($\sigma_1$ and $\sigma_2$), weighted with their respective component compositions, $A_1$ and $A_2$.
The iteration starting values for the components are as follows:

Component 1: Mw = 30,000, $\sigma$ = 0.300, and A = 0.475

Component 2: Mw = 250,000, $\sigma$ = 0.300, and A = 0.475

(Note $\sigma_1 = \sigma_2$ and $A_1 + A_2 = 1$)

The bounds for components 1 and 2 are such that $\sigma$ is constrained such that $\sigma > 0.001$, yielding an Mw/Mn of approximately 2.00 and $\sigma < 0.450$, yielding a Mw/Mn of approximately 5.71. The composition, A, is constrained between 0.000 and 1.000. The Mw is constrained between 2,500 and 2,000,000. The composition, A, is constrained between 0.000 and 1.000. The Mw is constrained between 2,500 and 2,000,000.

The "GRG Nonlinear" engine was selected in Excel Solver™ and precision was set at 0.00001 and convergence was set at 0.0001. The solutions were obtained after convergence (in all cases shown, the solution converged within 60 iterations).

Average short chain branching frequency distributions for the LMW and HMW components are estimated by proportioning the short chain branching based on the weight fraction distribution of the two components, $dW_{f1}$ and $dW_{f2}$, obtained from the deconvolution described above and averaged for each component.

Bimodality Test Method

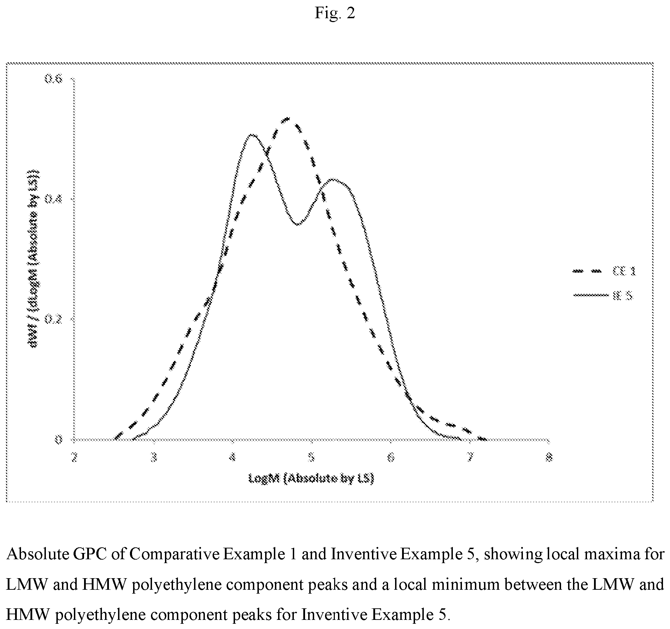

The presence or absence of resolved bimodality is determined by plotting dWf/dLogM (mass detector response) on y-axis versus LogM on the x-axis to obtain a GPC chromatogram curve containing local maxima log(MW) values for LMW and HMW polyethylene component peaks, and observing the presence or absence of a local minimum between the LMW and HMW polyethylene component peaks. The dWf is change in weight fraction, dLogM is also referred to as dLog(MW) and is change in logarithm of molecular weight, and LogM is also referred to as Log(MW) and is logarithm of molecular weight. Figure 2 shows the absolute GPC chromatogram of certain Inventive and Comparative Examples showing local maxima for LMW and HMW polyethylene component peaks and a local minimum between the LMW and HMW polyethylene component peaks to depict the points for the Bimodality Test Method.

Extrusion Line Speed

The extrusion line speed is a key parameter in drip microirrigation production, as it determines the machine occupancy per produced unit. A high line speed is therefore seen beneficial for the tape manufacturer. The line has been optimized in die and pin geometry to allow a line speed as high as possible. To measure maximum extrusion line speed, the line speed is increased incrementally from 200 m/min to 250, 300, 350 and 400 m/min. The line speed is recorded by the extrusion parameters that are displayed by the control unit. The highest line speed where the tape is running stable for several minutes, e.g. 30 minutes, is recorded and is deemed as the maximum extrusion line speed for the example. In case of a breakage of the extrudate at this speed, the lower line speed - where the product is still running stable - is regarded as being the maximum extrusion line speed.

**EXAMPLES**

Materials Used

The following materials were included in the examples discussed below.

FINGERPRINT™ DFDC 7525, a unimodal ethylene/1-hexene copolymer medium density polyethylene is used as Comparative Example (CE) 1 and is commercially available from The Dow Chemical Company (Midland, MI).

Preparation of Comparative Examples 2-4 and Inventive Examples 5-7

Example bimodal medium density polyethylene compositions designated as Comparative Examples (CE) 2, 3, and 4, and Inventive Examples (IE) 5, 6, and 7 are produced via gas phase polymerization in a single-reactor. A main catalyst was fed to a polyethylene reactor, commercially available as UNIPOL™ from Univation Technologies, via a 0.25 inch (") injection tube. A trim catalyst was also fed to the polyethylene reactor via the same 0.25" injection tube at a rate sufficient to provide the desired resin flow index. The reactor gas composition was controlled by metering the feeds to the polyethylene reactor at rates sufficient to maintain the desired ethylene partial pressure, molar ratio of comonomer to ethylene ($C_2$), molar ratio of hydrogen gas ($H_2$) to ethylene ($C_2$), and amount of isopentane. An additive, commercially available as CA-300 from Univation Technologies, was fed separately to the polyethylene reactor at a rate sufficient to maintain an additive concentration of about 35-55 parts per million by weight (ppmw) based on the ethylene feed rate to the reactor. The polyethylene reactor temperature was maintained at a desired temperature and the reactor residence time was from about 1.8 hours to 2.5 hours. The reactor bed weight was maintained by discharging granular resin into a discharge tank, which was purged with nitrogen before being dumped into a fiberpack and purged again with a mixture of nitrogen and steam. Table 1A lists the polymerization conditions for CE 2, CE3, and CE4. Table 1B lists the polymerization conditions for IE 5, IE 6, and IE 7.

The product is combined with additives (500 ppm calcium stearate, 1300 ppm Irganox™ 1010, and 1300 ppm Irgafos™ 168) and fed to a continuous mixer (Kobe Steel, Ltd. LCM-100 continuous mixer), which is closed coupled to a gear pump, and equipped with a melt filtration device and an underwater pelletizing system.

The properties of the Comparative Examples and Inventive Examples are provided below in Tables 2A and 2B. In Tables 2A and 2B, "HMW" refers to the high molecular weight polyethylene component, and "LMW" refers to the low molecular weight polyethylene component.

Microirrigation drip tapes are formed from the bimodal medium density polyethylene composition using a Maillefer International Oy Extruder MXC 60-36D with a diameter of 60 mm and a length/diameter (L/D) ratio of 36. The extruder uses a suitable temperature profile to achieve a melt temperature of 240°C. The extruder is equipped with an annular die having a 34.5 mm diameter and a pin having a 32.5 mm diameter (gap of 1 mm). Each microirrigation drip tape has an internal diameter of 16 mm. Thickness of the annular wall is adjusted by changing the rotations per minute (rpm) of the extruder, and the line speed of the extruder. Then, each microirrigation drip tape is calibrated and water cooled. During cooling of the tape, just after exiting the extruder, emitters are placed on the interior surface of the annular wall. Down the line, perforations in the annular wall at the emitters are made online before winding the tape by a mechanical drilling device or laser cut. The extrusion line speed is provided in Tables 2A and 2B.

High speed processing of tapes is a key property and need for the efficient production of irrigation tapes. Processing trials have been performed on a Maillefer Test line PIL032-miniFT. This line reflects an entry model for the drip irrigation market that is readily available from Maillefer upon ordering. The line has been modified with a belt haul-off, type RCI 32, being capable for higher line speeds of 300 to 400 m/min for development purposes. For the calibration a Maillefer Vacuum trough of the type BRI 32-16m with dryer has been used.

The Inventive Examples 5, 6 and 7 have been processed at line speeds up to 400 m/min with line and process settings according to the following table: For Inventive Examples 5 and 6, 8 mil tapes have been produced. Two different thickness have been produced of the Inventive Example 7, 8 mil (0.20 mm) (designated as IE 7A) and 6 mil (0.15 mm) (designated as IE 7B) thickness. Process parameters for the Inventive Examples are shown in Table A below.

**Table A - Process Parameters for Inventive Example Microirrigation Tapes**

|  |  | IE 5 | IE 6 | IE 7A | IE 7B |
|---|---|---|---|---|---|
| Temperature settings °C | Zone 1 | 150 | 150 | 150 | 150 |
|  | Zone 2 | 210 | 210 | 210 | 210 |
|  | Zone 3 | 225 | 225 | 225 | 225 |
|  | Zone 4 | 230 | 230 | 230 | 230 |
|  | Zone 5 | 230 | 230 | 230 | 230 |
|  | Zone 6 | 250 | 250 | 250 | 250 |
|  | Adapter | 250 | 250 | 250 | 250 |
|  | Head -2 | 250 | 250 | 250 | 250 |
|  | Head 3 | 250 | 250 | 250 | 250 |
|  | Head 4 | 250 | 250 | 250 | 250 |
| Rpm | 1/min | 73.8 | 75.2 | 70 | 54.7 |
| Torque | Nm | 266.4 | 253.4 | 240.1 | 218.6 |
| Current ratio | % | 68 | 64.6 | 61.4 | 55.7 |
| Main Pressure | Bar | 373.5 | 346.2 | 322.5 | 295.9 |
| Head Pressure | Bar | 273.8 | 253 | 230.1 | 213.7 |
| Melt Temperature | °C | 234.8 | 241.9 | 241 | 241.5 |
| Line Speed | m/min | 400 | 399.992 | 399.911 | 399.98 |
| Throughput | g/m kg/h | 9.22 g/m 221.28 kg/h | 9.67 g/m 232.07535 kg/h | 9.09 g/m 218.11 kg/h | 7.04 g/m 168.95 kg/h |
| Diameter average | mm | 15.72 | 16.56 | 15.96 | 15.98 |
| Water temperature | °C | 17.1 | 19.5 | 24.1 | 26.2 |
| Tape thickness | Mil | 8 mil | 8 mil | 8 mil | 6 mil |

(continued)

|  | | IE 5 | IE 6 | IE 7A | IE 7B |
|---|---|---|---|---|---|
| Temperature settings °C | Zone 1 | 150 | 150 | 150 | 150 |
| Die / Pin | Mm | 34.5/32.5 | 34.5/32.5 | 34.5/32.5 | 34.5/32.5 |

**Table 1A - Comparative Examples 2-4 Polymerization Conditions**

|  | CE2 | CE3 | CE4 |
|---|---|---|---|
| Bed Temp. (° C.) | 95 | 95 | 95 |
| Reactor Pressure (kPa) | 2406 | 2406 | 2406 |
| $C_2$ Partial Pressure (kPa) | 1517 | 1517 | 1517 |
| $H_2/C_2$ Molar Ratio | 0.0037 | 0.0037 | 0.0034 |
| $C_6/C_2$ Molar Ratio | 0.0067 | 0.0061 | 0.0080 |
| Induced Conden. Agent (mol%) | 1-methylbutane (10.6) | 1-methylbutane (11.4) | 1-methylbutane (13.0) |
| Superficial Gas Velocity (m/sec) | 0.55 | 0.52 | 0.55 |
| Main Catalyst | MC-1[a] | MC-1[a] | MC-2[b] |
| Trim Catalyst | TC-1[c] | TC-1[c] | TC-2[d] |
| Catalyst Flow (g/hour) | 7.5 | 7.9 | 6.3 |
| Trim/Cat (1.5 wt% trim) | 0.26 | 0.18 | 0.16 |
| CA-300 Continuity Additive (ppm) | 53 | 51 | 38 |
| Catalyst Zr conc. (wt%) | 0.51 | 0.51 | 0.43 |
| Catalyst A1 conc. (wt%) | 20.8 | 20.8 | 18.9 |
| Starting seedbed = granular HDPE resin | Preloaded | Preloaded | Preloaded |
| Fluidized Bed Weight (kg) | 30 | 29 | 38 |
| Copolymer Production Rate (kg/hour) | 17 | 15 | 19 |
| Copolymer Residence Time (hour) | 1.8 | 1.9 | 2.0 |
| Copolymer Fluid Bulk Density, (kg/m$^3$) | 178 | 175 | 245 |

[a] Spray-dried mixture of bis(2-pentamethylphenylamido)ethyl)amine zirconium dibenzyl, (1,3-dimethyl-4,5,6,7-tetrahydroindene)(methyl cyclopentadienyl)zirconium dimethyl, methylalumoxane (MAO), and fumed silica, commercially available as CAB-O-SIL® TS-610 from Cabot Corporation, in a mineral oil slurry
[b] Spray-dried mixture of bis(2-pentamethylphenylamido)ethyl)amine zirconium dibenzyl, (cyclopentadienyl)(1,5-dimethylindenyl)zirconium dimethyl, methylalumoxane (MAO), and fumed silica, commercially available as CAB-O-SIL® TS-610 from Cabot Corporation, in a mineral oil slurry
[c] Mixture of 0.04 wt.% (1,3-dimethyl-4,5,6,7-tetrahydroindene)(methyl cyclopentadienyl)zirconium dimethyl bis(n-butylcyclopentadienyl)zirconium dimethyl in isopentane
[d] Mixture of 0.04 wt.% (cyclopentadienyl)(1,5-dimethylindenyl)zirconium dimethyl in isopentane

**Table 1B - Inventive Examples 5-7 Polymerization Conditions**

|  | IE5 | IE6 | IE7 |
|---|---|---|---|
| Bed Temp. (° C.) | 95 | 95 | 95 |
| Reactor Pressure (kPa) | 2413 | 2413 | 2413 |
| $C_2$ Partial Pressure (kPa) | 1517 | 1517 | 1517 |
| $H_2/C_2$ Molar Ratio | 0.0037 | 0.0037 | 0.0034 |
| $C_6/C_2$ Molar Ratio | 0.0146 | 0.0150 | 0.0146 |
| Induced Conden. Agent (mol%) | 1-methylbutane (6.4) | 1-methylbutane (6.4) | 1-methylbutane (6.9) |

(continued)

| | IE5 | IE6 | IE7 |
|---|---|---|---|
| Superficial Gas Velocity (m/sec) | 0.55 | 0.55 | 0.58 |
| Main Catalyst | MC-1[a] | MC-1[a] | MC-2[b] |
| Trim Catalyst | TC-1[c] | TC-1[c] | TC-2[d] |
| Catalyst Flow (g/hour) | 7.4 | 9.0 | 5.7 |
| Trim/Cat (1.5 wt% trim) | 0.16 | 0.14 | 0.11 |
| CA-300 Continuity Additive (ppm) | 35 | 38 | 44 |
| Catalyst Zr conc. (wt%) | 0.51 | 0.51 | 0.43 |
| Catalyst A1 conc. (wt%) | 20.8 | 20.8 | 18.9 |
| Starting seedbed = granular HDPE resin | Preloaded | Preloaded | Preloaded |
| Fluidized Bed Weight (kg) | 39 | 38 | 41 |
| Copolymer Production Rate (kg/hour) | 21 | 19 | 16 |
| Copolymer Residence Time (hour) | 1.9 | 2.0 | 2.5 |
| Copolymer Fluid Bulk Density, (kg/m$^3$) | 258 | 242 | 255 |

[a] Spray-dried mixture of bis(2-pentamethylphenylamido)ethyl)amine zirconium dibenzyl, (1,3-dimethyl-4,5,6,7-tetrahydroindene)(methyl cyclopentadienyl)zirconium dimethyl, methylalumoxane (MAO), and fumed silica, commercially available as CAB-O-SIL® TS-610 from Cabot Corporation, in a mineral oil slurry
[b] Spray-dried mixture of bis(2-pentamethylphenylamido)ethyl)amine zirconium dibenzyl, (cyclopentadienyl)(1,5-dimethylindenyl)zirconium dimethyl, methylalumoxane (MAO), and fumed silica, commercially available as CAB-O-SIL® TS-610 from Cabot Corporation, in a mineral oil slurry
[c] Mixture of 0.04 wt.% (1,3-dimethyl- 4,5,6,7-tetrahydroindene)(methyl cyclopentadienyl)zirconium dimethyl bis(n-butylcyclopentadienyl)zirconium dimethyl in isopentane
[d] Mixture of 0.04 wt.% (cyclopentadienyl)(1,5-dimethylindenyl)zirconium dimethyl in isopentane

**Table 2A - Properties of Comparative Examples 1-4**

| | CE 1 | CE 2 | CE 3 | CE 4 |
|---|---|---|---|---|
| **Modality** | Unimodal | Bimodal | Bimodal | Bimodal |
| **Density (g/cm$^3$)** | 0.939 | 0.950 | 0.950 | 0.952 |
| **121 (dg/min)** | 22 | 16 | 11 | 17 |
| **(MFR2) 121/12** | 130 | 113 | 91 | 148 |
| **Mn (g/mol)** | 10,270 | 14,833 | 15,598 | 10,388 |
| **Mw (g/mol)** | 240,550 | 204,466 | 217,836 | 229,925 |
| **Mz (g/mol)** | 2,662,890 | 1,204,385 | 1,144,625 | 1,267,304 |
| **Mw/Mn** | 23.42 | 13.78 | 13.97 | 22.13 |
| **SCB/1000C$^2$** | NM[1] | 1.1 | 1.0 | 0.6 |
| **LMW Mw (g/mol)** | N/A[3] | 20,078 | 19,481 | 20,243 |
| **HMW Mw (g/mol)** | N/A[3] | 388,788 | 393,342 | 463,631 |
| **HMW Mw/ LMW Mw** | N/A[3] | 19.4 | 20.19 | 22.9 |
| **HMW wt. fraction** | N/A[3] | 0.576 | 0.541 | 0.467 |
| **LMW SCB/1000C$^2$** | N/A[3] | 0.7 | 0.8 | 0.6 |
| **HMW SCB/1000C$^2$** | N/A[3] | 1.3 | 1.2 | 0.5 |
| **Tensile Yield Strength (MPa)** | 19.3 | 25.2 | 24.8 | 25.7 |

(continued)

|  | CE 1 | CE 2 | CE 3 | CE 4 |
|---|---|---|---|---|
| **Modality** | Unimodal | Bimodal | Bimodal | Bimodal |
| **NCTL Failure Time @30% Yield Stress (hrs)** | 560 | >1000 | >1000 | 416 |
| **Strain Hardening Modulus (MPa)** | NM[1] | 59.3 | 61.8 | 51.3 |
| **Crossover G'=G" kPa** | 14.8 | 41.7 | 45.3 | 35.4 |
| **3094• HMW wt.% - 30.52• Crossover G'=G" - 160.1•( LMW SCB/1000C/ HMW SCB/1000C) - 211.7** | N/A[3] | -18.23 | -30.85 | -18.16 |
| **Maximum Extrusion Line Speed (m/min)** | 400 | Frequent breaks | Frequent breaks | Not processable |

[1] NM = not measured.
[2] SCB/1000C = average short chain branching frequency per 1000 carbons
[3] Comparative Example 1 is a unimodal resin and so these parameters are not applicable.

**Table 2B - Properties of Inventive Examples 5-7**

|  | IE 5 | IE 6 | IE 7 |
|---|---|---|---|
| **Modality** | Bimodal | Bimodal | Bimodal |
| **Density (g/cm$^3$)** | 0.942 | 0.942 | 0.941 |
| **I21 (dg/min)** | 11 | 15 | 18 |
| **(MFR2) I21/I2** | 93 | NM[1] | 124 |
| **Mn (g/mol)** | 16,165 | 16,145 | 12,575 |
| **Mw (g/mol)** | 209,232 | 206,598 | 208,507 |
| **Mz (g/mol)** | 1,032,727 | 1,150,292 | 1,106,758 |
| **Mw/Mn** | 12.94 | 12.80 | 16.58 |
| **SCB/1000C[2]** | 1.46 | 1.85 | 2.49 |
| **LMW Mw (g/mol)** | 20,750 | 21,138 | 21,324 |
| **HMW Mw (g/mol)** | 374,420 | 376,936 | 409,578 |
| **HMW Mw/ LMW Mw** | 18.04 | 17.83 | 19.21 |
| **HMW wt. fraction** | 0.546 | 0.525 | 0.477 |
| **LMW SCB/1000C[2]** | 0.94 | 1.27 | 2.23 |
| **HMW SCB/1000C[2]** | 1.93 | 2.42 | 2.87 |
| **Tensile Yield Strength (MPa)** | 20.9 | 20.1 | 19.8 |
| **NCTL Failure Time @ 30% Yield Stress (hrs)** | >1000 | >1000 | >1000 |
| **Strain Hardening Modulus (MPa)** | 92.2 | 86.4 | 71.7 |
| **Crossover G'=G" kPa** | 45.3 | 41.4 | 36.8 |
| **3094• HMW wt. % - 30.52• Crossover G'=G" - 160.1•( LMW SCB/1000C/ HMW SCB/1000C) - 211.7** | 18.02 | 65.73 | 17.17 |
| **Maximum Extrusion Line Speed (m/min)** | 400 | 400 | 400[3] |

[1] NM = not measured.
[2] SCB/1000C = average short chain branching frequency per 1000 carbons
[3] Maximum Extrusion Line Speed for both Inventive Example 7A (8 mil) and 7B (6 mil)

As can be seen from Tables 2A and 2B, the Inventive Examples have a NCTL failure time of > 1000 hours, a strain hardening modulus of greater than 65 MPa, and maximum extrusion line speeds of 400 m/min. None of the comparative examples have a combination of these parameters.

The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

**Claims**

1. A bimodal medium density polyethylene composition comprising (i) a high molecular weight (HMW) polyethylene component comprising an ethylene/$\alpha$-olefin copolymer and (ii) a low molecular weight (LMW) polyethylene component comprising an ethylene/$\alpha$-olefin copolymer; the bimodal medium density polyethylene composition having the following:

   (a) a density of from 0.937 to 0.946 g/cm$^3$;
   (b) a high load melt index (I21) from 7 to 20 g/10 min;
   (c) a crossover G'=G" of from 30 to 50 kPa;
   (d) a notched constant tensile load failure time at 30% yield stress, as measured according to ASTMD5397, of greater than 700 hours;
   (e) a strain hardening modulus of greater than 65 MPa; and

       wherein the LMW polyethylene component has an average short chain branching frequency of greater than 0.9 SCB per 1000 carbons;
       wherein the HMW polyethylene component has a weight average molecular weight, Mw, of from 300,000 to 600,000 g/mol; and
       wherein the HMW polyethylene component is present in an amount of from 45 to 60 wt.%, based on total weight of the bimodal medium density polyethylene composition; wherein high load melt index (I21) is measured as described in the description; crossover G'=G" is determined as described in the description; and average short chain branching frequency is measured as described in the description.

2. The bimodal medium density polyethylene composition of claim 1, wherein the HMW polyethylene component has an average short chain branching frequency (HMW SCB/1000C), and the following equation is satisfied:

$$3094 \bullet \text{HMW wt.\%} - 30.52 \bullet \text{Crossover } G'=G" - 160.1 \bullet (\text{LMW SCB/1000C/ HMW}$$
$$\text{SCB/1000C}) - 211.7 \geq 0$$

   wherein "HMW wt.%" is the weight percent of the HWM polyethylene present in the bimodal medium density polyethylene composition, based on total weight of the bimodal medium density polyethylene composition, "Crossover G'=G"" is the crossover G'=G" of the bimodal medium density polyethylene composition, "LMW SCB/1000C" is the average short chain branching frequency of the LMW polyethylene component, and "HMW SCB/1000C" is the average short chain branching frequency of the HMW polyethylene component.

3. The bimodal medium density polyethylene composition of any preceding claim, wherein the bimodal medium density polyethylene composition has a resolved bimodality (resolved molecular weight distribution) showing in a chromatogram of gel permeation chromatography (GPC) of the bimodal medium density polyethylene composition, wherein the chromatogram shows a peak representing the HMW polyethylene component, a peak representing the LMW polyethylene component, and a local minimum in a range of Log(molecular weight) ("Log(MW)") 3.0 to 7.0 between the peak representing the HMW polyethylene component and the peak representing the LMW polyethylene component, measured according to the Bimodality Test Method described in the above disclosure.

4. The bimodal medium density polyethylene composition of any preceding claim, wherein the HMW polyethylene component has an average short chain branching frequency of greater than 1.4 SCB per 1000 carbons.

5. The bimodal medium density polyethylene composition of any preceding claim, wherein the ratio of the weight average molecular weight, Mw, of the HMW polyethylene component to the weight average molecular weight, Mw, of the LMW polyethylene component is from 16 to 27.

6. The bimodal medium density polyethylene composition of any preceding claim, wherein the bimodal medium density polyethylene composition is extrudable at process speeds greater than 350 m/min.

7. A microirrigation drip tape comprising the bimodal medium density polyethylene composition of claim 1.

**Patentansprüche**

1. Bimodale Polyethylenzusammensetzung mittlerer Dichte, umfassend (i) eine Polyethylenkomponente mit hohem Molekulargewicht (HMW), umfassend ein Ethylen/$\alpha$-Olefin-Copolymer, und (ii) eine Polyethylenkomponente mit niedrigem Molekulargewicht (LMW), umfassend ein Ethylen/$\alpha$-Olefin-Copolymer; wobei die bimodale Polyethylenzusammensetzung mittlerer Dichte folgendes aufweist:

   (a) Dichte von 0,937 bis 0,946 g/cm$^3$;
   (b) einen Hochlast-Schmelzindex (I21) von 7 bis 20 g/10 min;
   (c) einen Übergang G'=G" von 30 bis 50 kPa;
   (d) eine Ausfallzeit der gekerbten konstanten Zuglast bei 30 % Streckspannung, wie gemessen gemäß ASTMD5397, von mehr als 700 Stunden;
   (e) ein Verformungsmodul von größer als 65 MPa; und

   wobei die LMW-Polyethylenkomponente eine durchschnittliche Kurzkettenverzweigungshäufigkeit von mehr als 0,9 SCB pro 1000 Kohlenstoffe aufweist;
   wobei die HMW-Polyethylenkomponente ein gewichtsmittleres Molekulargewicht, Mw, von 300.000 bis 600.000 g/mol aufweist; und
   wobei die HMW-Polyethylenkomponente in einer Menge von 45 bis 60 Gew.-% vorhanden ist, bezogen auf das Gesamtgewicht der bimodalen Polyethylenzusammensetzung mittlerer Dichte; wobei der Hochlast-Schmelzindex (I21) wie in der Beschreibung gemessen wird; der Übergang G'=G" bestimmt wird, wie in der Beschreibung beschrieben; und die durchschnittliche Kurzkettenverzweigungshäufigkeit gemessen wird, wie in der Beschreibung beschrieben.

2. Bimodale Polyethylenzusammensetzung mittlerer Dichte nach Anspruch 1, wobei die HMW-Polyethylenkomponente eine durchschnittliche Kurzkettenverzweigungshäufigkeit (HMW SCB/1000C) aufweist und die folgende Gleichung erfüllt ist:

   3094 • HMW Gew.% - 30,52 • Übergang G'=G" - 160,1 • (LMW SCB/1000C/ HMW SCB/1000C) - 211,7 $\geq$ 0

   wobei "HMW Gew.-%" das Gewichtsprozent des HWM-Polyethylens, das in der bimodalen Polyethylenzusammensetzung mittlerer Dichte vorhandenen ist, bezogen auf das Gesamtgewicht der bimodalen Polyethylenzusammensetzung mittlerer Dichte ist, "Übergang G'=G"" der Übergang G'=G" der bimodalen Polyethylenzusammensetzung mittlerer Dichte ist, "LMW SCB/1000C" die durchschnittliche Kurzkettenverzweigungshäufigkeit der LMW-Polyethylenkomponente ist und "HMW SCB/1000C" die durchschnittliche Kurzkettenverzweigungshäufigkeit der HMW-Polyethylenkomponente ist.

3. Bimodale Polyethylenzusammensetzung mittlerer Dichte nach einem der vorstehenden Ansprüche, wobei die bimodale Polyethylenzusammensetzung mittlerer Dichte eine aufgelöste Bimodalität (aufgelöste Molekulargewichtsverteilung) aufweist, die sich in einem Chromatogramm der Gelpermeationschromatographie (GPC) der bimodalen Polyethylenzusammensetzung mittlerer Dichte zeigt, wobei das Chromatogramm eine Spitze, die die HWM-Polyethylenkomponente darstellt, eine Spitze, die die LMW-Polyethylenkomponente darstellt, und ein lokales Minimum in einem Bereich von Log(Molekulargewicht) ("Log(MW)") 3,0 bis 7,0 zwischen der Spitze, die die HWM-Polyethylenkomponente darstellt, und der Spitze, die die LMW-Polyethylenkomponente darstellt, zeigt, gemessen gemäß dem Bimodalitätsprüfverfahren, die in der obigen Beschreibung beschrieben ist.

4. Bimodale Polyethylenzusammensetzung mittlerer Dichte nach einem der vorstehenden Ansprüche, wobei die HMW-Polyethylenkomponente eine durchschnittliche Kurzkettenverzweigungshäufigkeit von mehr als 1,4 SCB pro 1000 Kohlenstoffe aufweist.

**5.** Bimodale Polyethylenzusammensetzung mittlerer Dichte nach einem der vorstehenden Ansprüche, wobei das Verhältnis des gewichtsmittleren Molekulargewichts, Mw, der HMW-Polyethylenkomponente zu dem gewichtsmittleren Molekulargewicht, Mw, der LMW-Polyethylenkomponente von 16 bis 27 beträgt.

**6.** Bimodale Polyethylenzusammensetzung mittlerer Dichte nach einem der vorstehenden Ansprüche, wobei die bimodale Polyethylenzusammensetzung mittlerer Dichte bei Prozessgeschwindigkeiten von mehr als 350 m/min extrudierbar ist.

**7.** Tropfband für die Mikrobewässerung, umfassend die bimodale Polyethylenzusammensetzung mittlerer Dichte nach Anspruch 1.

**Revendications**

**1.** Composition bimodale de polyéthylène moyenne densité comprenant (i) un composant de polyéthylène de masse moléculaire élevée (HMW) comprenant un copolymère éthylène/$\alpha$-oléfine et (ii) un composant de polyéthylène de faible masse moléculaire (LMW) comprenant un copolymère éthylène/$\alpha$-oléfine ; la composition bimodale de polyéthylène moyenne densité ayant ce qui suit :

(a) une masse volumique allant de 0,937 à 0,946 g/cm$^3$ ;
(b) un indice de fluidité sous charge élevée (121) allant de 7 à 20 g/10 min ;
(c) un croisement G'=G" allant de 30 à 50 kPa ;
(d) un temps de rupture sous charge de traction constante avec entaille à 30 % de limite d'élasticité, tel que mesuré selon la norme ASTM D5397, supérieur à 700 heures ;
(e) un module d'écrouissage supérieur à 65 MPa ; et

dans laquelle le composant de polyéthylène LMW a une fréquence moyenne de ramification à chaînes courtes supérieure à 0,9 SCB pour 1 000 carbones ;
dans laquelle ledit composant de polyéthylène HMW a une masse moléculaire moyenne en poids, Mw, allant de 300 000 à 600 000 g/mol ; et
dans laquelle le composant de polyéthylène HMW est présent en une quantité allant de 45 à 60 % en poids, sur la base du poids total de la composition bimodale de polyéthylène moyenne densité ; dans laquelle l'indice de fusion sous charge élevée (121) est mesuré comme indiqué dans la description ; le croisement G'=G" est déterminé comme décrit dans la description ; et la fréquence moyenne de ramification à chaînes courtes est mesurée comme indiqué dans la description.

**2.** Composition bimodale de polyéthylène moyenne densité selon la revendication 1, dans laquelle le composant de polyéthylène HMW a une fréquence moyenne de ramification à chaînes courtes (HMW SCB/1000C), et l'équation suivante est satisfaite :

$$3\ 094 \cdot \% \text{ en poids HMW} - 30,52 \cdot \text{Croisement G'=G''} - 160,1 \cdot$$
$$(\text{LMW SCB/1000C/HMW SCB/1000C}) - 211,7 \geq 0$$

dans laquelle « % en poids HMW » est le pourcentage en poids du polyéthylène HWM présent dans la composition bimodale de polyéthylène moyenne densité, sur la base du poids total de la composition bimodale de polyéthylène moyenne densité, « Croisement G'=G" » est le croisement G'=G" de la composition bimodale de polyéthylène moyenne densité, « LMW SCB/1000C » est la fréquence moyenne de ramification à chaînes courtes du composant de polyéthylène LMW, et « HMW SCB/1000C » est la fréquence moyenne de ramification à chaînes courtes du composant de polyéthylène HMW.

**3.** Composition bimodale de polyéthylène moyenne densité selon l'une quelconque revendication précédente, dans laquelle la composition bimodale de polyéthylène moyenne densité a une bimodalité résolue (distribution résolue des masses moléculaires) apparaissant dans un chromatogramme de chromatographie par perméation sur gel (GPC) de la composition bimodale de polyéthylène moyenne densité, le chromatogramme montrant un pic représentant le composant de polyéthylène HMW, un pic représentant le composant de polyéthylène LMW, et un minimum local compris dans une plage de Log(masse moléculaire) (« Log(MW) ») 3,0 à 7,0 entre le pic représentant le composant de polyéthylène HMW et le pic représentant le composant de polyéthylène LMW, mesurée selon la méthode d'essai de bimodalité décrite dans la description ci-dessus.

4. Composition bimodale de polyéthylène moyenne densité selon l'une quelconque revendication précédente, dans laquelle le composant de polyéthylène HMW a une fréquence moyenne de ramification à chaînes courtes supérieure à 1,4 SCB pour 1000 carbones.

5. Composition bimodale de polyéthylène moyenne densité selon l'une quelconque revendication précédente, dans laquelle le rapport de la masse moléculaire moyenne en poids, Mw, du composant de polyéthylène HMW à la masse moléculaire moyenne en poids, Mw, du composant de polyéthylène LMW, va de 16 à 27.

6. Composition bimodale de polyéthylène moyenne densité selon l'une quelconque revendication précédente, dans laquelle la composition bimodale de polyéthylène moyenne densité peut être extrudée à des vitesses de traitement supérieures à 350 m/min.

7. Bande de goutte à goutte pour micro-irrigation comprenant la composition bimodale de polyéthylène moyenne densité selon la revendication 1.

# Fig. 1

Fig. 2

Absolute GPC of Comparative Example 1 and Inventive Example 5, showing local maxima for LMW and HMW polyethylene component peaks and a local minimum between the LMW and HMW polyethylene component peaks for Inventive Example 5.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019118461 A1
- US 2003187083 A1
- US 7498282 B
- US 5627242 A
- US 5665818 A
- US 5677375 A
- US 20070043177 A1
- EP 0794200 A
- EP 0649992 B1
- EP 0802202 A
- EP 634421 B
- WO 2009148487 A1
- US 3709853 A
- US 4003712 A
- US 4011382 A
- US 4302566 A
- US 4543399 A
- US 4882400 A
- US 5352749 A
- US 5541270 A
- US 20200024376 A1
- US 2020024376 A1
- US 20180155473 A1
- WO 2016172279 A1
- WO 2015123172 A1
- WO 2015123179 A1
- US 4453399 A
- US 4588790 A
- US 4994534 A
- US 5462999 A
- US 6489408 B
- US 4988783 A
- US 2020048379 A1
- US 62880826
- US 62990549
- US 2030033 W
- US 5292845 A, Kawasaki

**Non-patent literature cited in the description**

- **WILLIAMS** ; **WARD**. *J. Polym. Sci., Polym. Let.*, 1968, vol. 6, 621
- **MOUREY** ; **BALKE**. Chromatography Polym.. 1992
- **BALKE** ; **THITIRATSAKUL** ; **LEW** ; **CHEUNG** ; **MOUREY**. Chromatography Polym.. 1992
- **ZIMM, B.H.** *J. Chem. Phys.*, 1948, vol. 16, 1099
- **KRATOCHVIL, P.** Classical Light Scattering from Polymer Solutions. Elsevier, 1987
- **J. C. RANDALL**. *Rev. Macromol. Chem. Phys.*, vol. C29, 201-317